# FASCICULE DE BREVET EUROPEEN

(11) **EP 0 693 753 B1**
(45) Date de publication et mention de la délivrance du brevet: **17.06.1998**
(21) Numéro de dépôt: 95401687.9
(22) Date de dépôt: 13.07.1995
(51) Int. Cl.: G21C 13/036, G21C 7/12

(54) **Procédé de réalisation d'un joint d'étanchéité entre un mécanisme de grappe de commande et un adaptateur de réacteur nucléaire, et joint correspondant**
Verfahren zur Herstellung einer dichten Verbindung zwischen einem Steuerstabantriebsvorrichtung und einem Adapter eines Kernreaktors, und dazu passende Verbindung
Method for implementing a leakproof connection means between a control rod drive mechanism and an adapter of a nuclear reactor, and corresponding connection means

(30) Priorité: 19.07.1994 FR 9408918
(43) Date de publication de la demande: 24.01.1996
(73) Titulaire: JEUMONT INDUSTRIE, F-92400 Courbevoie (FR)
(72) Inventeur: Charlet, Jean-Pierre, F-59149 Cousolre (FR)
(74) Mandataire: Corret, Hélène

(56) Documents cités:
- US-A- 3 850 796
- US-A- 5 031 816
- DATABASE WPI Week 8616, Derwent Publications Ltd., London, GB; AN 86-103291 & JP-A-61 047 588 (HITACHI) 8 Mars 1986
- PATENT ABSTRACTS OF JAPAN vol. 14, no. 525 (P-1132) 19 Novembre 1990 & JP-A-02 221 895 (TOSHIBA) 4 Septembre 1990

## Description

L'invention appartient au domaine des réacteurs nucléaires.

Un réacteur est une enceinte de pression contenant le fluide primaire et supportant le coeur par l'intermédiaire des équipements internes. Il se compose essentiellement d'une cuve et d'un couvercle amovible dont la calotte sphérique est percée de trous, servant à la mise en place des adaptateurs pour les mécanismes des grappes de contrôle.

Ainsi, l'invention concerne plus particulièrement les joints assurant l'étanchéité entre chaque adaptateur et un mécanisme de grappe de contrôle.

Les joints qui sont prévus à l'origine sont du type joints à lèvres. Les adaptateurs et les mécanismes de grappe de contrôle sont régulièrement soumis à des opérations de contrôle et de maintenance. Il est alors nécessaire de découper le joint pour pouvoir avoir accès, par exemple, aux manchettes thermiques qui sont situées à l'intérieur de l'adaptateur.

Une fois que l'opération de contrôle ou de maintenance est terminée, il est nécessaire de réaliser de nouveau un joint entre l'adaptateur et le mécanisme de grappe de contrôle, pour assurer l'étanchéité. Le joint d'origine peut être détérioré en cours d'intervention lors d'une opération de contrôle ou de maintenance et il ne peut plus être utilisé pour assurer l'étanchéité. Il est donc nécessaire de prévoir un autre joint, l'étanchéité devant impérativement être assurée.

On peut notamment citer le brevet US-A-5,031,816 qui décrit un système de joint de secours, lorsque le joint d'origine est défaillant. Cette solution de secours consiste à fixer, par soudure, un élément en forme de coupelle, à la fois sur l'adaptateur et sur le carter du mécanisme de grappe.

Ce joint de secours pose de nombreux inconvénients.

Tout d'abord, la fixation de la coupelle est réalisée alors que le mécanisme est monté sur l'adaptateur, le joint défaillant étant toujours en place. Ainsi, se posent des problèmes d'encombrement pour les dispositifs de soudure qui doivent être utilisés.

On peut encore noter que la coupelle est nécessairement réalisée en deux parties, pour pouvoir être placée entre l'adaptateur et le mécanisme, celui-ci étant déjà monté. Ceci accroît les difficultés de montage puisqu'il est nécessaire de réaliser des soudures croisées et augmente le risque de fuites.

Enfin, il s'agit seulement d'un joint supplémentaire de secours et non d'un joint remplaçant le joint défaillant. Ainsi, le joint d'origine fuit et le joint de secours sert à arrêter le fluide qui s'échappe de ce joint. En outre, le joint de secours crée une zone de rétention de fluide qui est préjudiciable car elle peut entraîner des corrosions.

On peut également se référer au brevet US-A-5,249,209 qui décrit l'outillage permettant de réaliser l'assemblage de la coupelle, faisant l'objet du brevet US-A-5,031,816 sur l'adaptateur et sur le mécanisme de grappe de contrôle. Comme indiqué précédemment, la coupelle est conçue en deux parties symétriques, ce qui accroît la complexité de l'outillage.

L'invention a pour objet de pallier les inconvénients de l'art antérieur, en proposant un procédé de remplacement du joint assurant l'étanchéité entre un adaptateur et un mécanisme de grappe de contrôle, ce procédé étant de réalisation simple, assurant le remplacement complet du joint et permettant ainsi d'accroître la durée de vie, tant de l'adaptateur que du mécanisme de grappe.

Ainsi, l'invention concerne un procédé de réalisation d'un joint d'étanchéité entre un mécanisme de grappe de contrôle et un adaptateur correspondant, lorsque le joint d'origine est défaillant, comprenant les étapes suivantes :
- découpage du joint d'origine,
- désassemblage du mécanisme de grappe de contrôle et de l'adaptateur,
- élimination de la partie du joint d'origine, qui est située sur l'adaptateur,
- formation d'une pièce en saillie ou lèvre à la partie inférieure du mécanisme, ladite pièce ou lèvre présentant une forme sensiblement annulaire,
- fixation sur l'adaptateur, d'un élément de forme sensiblement annulaire,
- assemblage du mécanisme de grappe de contrôle et de l'adaptateur et
- fixation de l'élément sur ladite pièce en saillie formée à l'extrémité inférieure du mécanisme de grappe de contrôle, pour obtenir l'étanchéité.

Le procédé selon l'invention peut également comporter les caractéristiques suivantes, prises isolément ou en combinaison :
- la section de l'élément présente une concavité tournée vers l'axe dudit élément,
- l'élément utilisé est réalisé en une seule partie,
- l'élément comporte un premier orifice dont le diamètre est légèrement supérieur à celui de la partie filetée de l'adaptateur et un deuxième orifice dont le diamètre correspond sensiblement à celui de la pièce en saillie ou lèvre,
- le premier orifice présente un chanfrein,
- un chanfrein pour la fixation de l'élément est réalisé sur l'adaptateur,
- la section de l'élément présente une première partie en arc de cercle qui se prolonge, du côté du deuxième orifice, par une partie sensiblement rectiligne,
- avant fixation sur le mécanisme de grappe de contrôle la paroi de l'élément située du côté du deuxième orifice est légèrement évasée, de façon à s'écarter de l'axe dudit élément, le diamètre du deuxième orifice étant alors légèrement supérieur à celui de ladite pièce en saillie ou lèvre,
- la fixation dudit élément sur le mécanisme de grappe de contrôle et sur l'adaptateur est réalisée par soudure,
- la soudure est réalisée à l'arc électrique, sous atmosphère inerte,
- ladite pièce en saillie ou lèvre est formée sur le mécanisme par usinage.

L'invention concerne également un joint de remplacement pour les joints assurant l'étanchéité entre un adaptateur et un mécanisme de grappe de contrôle.

Selon l'invention, le joint d'étanchéité comprend un élément annulaire fixé sur une pièce en saillie ou lèvre sensiblement annulaire formée à la partie inférieure dudit mécanisme et sur ledit adaptateur.

Le joint selon l'invention peut également comporter les caractéristiques suivantes, prises isolément ou en combinaison :
- la section dudit élément présente une concavité tournée vers l'axe dudit élément,
- l'élément est réalisé en une seule partie,
- ledit élément comprend un premier orifice dont le diamètre est légèrement supérieur à celui de la partie filetée de l'adaptateur et un deuxième orifice dont le diamètre correspond sensiblement à celui de ladite pièce en saillie ou lèvre,
- le premier orifice présente un chanfrein,
- la section dudit élément présente une première partie en arc de cercle qui se prolonge, du côté du deuxième orifice, par une partie sensiblement rectiligne,
- avant fixation sur le mécanisme de grappe de contrôle, la paroi dudit élément située du côté du deuxième orifice est légèrement évasée, et s'écarte de l'axe dudit élément, le diamètre du deuxième orifice étant alors légèrement supérieur à celui de ladite pièce en saillie ou lèvre,
- l'élément est fixé, par soudure, sur le mécanisme de grappe de contrôle et sur l'adaptateur.

L'invention sera mieux comprise et d'autres buts, avantages et caractéristiques de celle-ci apparaîtront plus clairement à la lecture de la description qui suit, faite au regard des figures sur lesquelles :
- la figure 1 représente une vue en coupe d'un réacteur nucléaire auquel s'applique l'invention,
- la figure 2 représente une vue partielle d'un mécanisme de grappe de contrôle avec un adaptateur, un joint selon l'art antérieur étant prévu entre ces deux éléments,
- la figure 3 représente une vue en coupe du détail A de la figure 2,
- la figure 4 est une vue partielle en coupe et selon son axe, d'un carter de mécanisme de grappe de contrôle,
- la figure 5 est une vue partielle en coupe et selon son axe, d'un adaptateur,
- la figure 6 est une vue partielle en coupe, selon leur axe, du carter du mécanisme de grappe et de l'adaptateur, après assemblage et formation d'un joint selon l'invention,
- la figure 7 est une vue agrandie d'un joint de l'art antérieur (en traits pointillés) et d'un joint selon l'invention (en traits continus),
- la figure 8 est une vue en coupe de l'élément constitutif du joint selon l'invention,
- la figure 9 représente le détail B de la figure 8,
- la figure 10 est une vue schématique du dispositif de soudure, sur l'adaptateur, du joint selon l'invention et
- la figure 11 est une vue schématique du dispositif de soudure, sur le mécanisme, du joint selon l'invention.

Les éléments communs aux différentes figures seront désignés par les mêmes références.

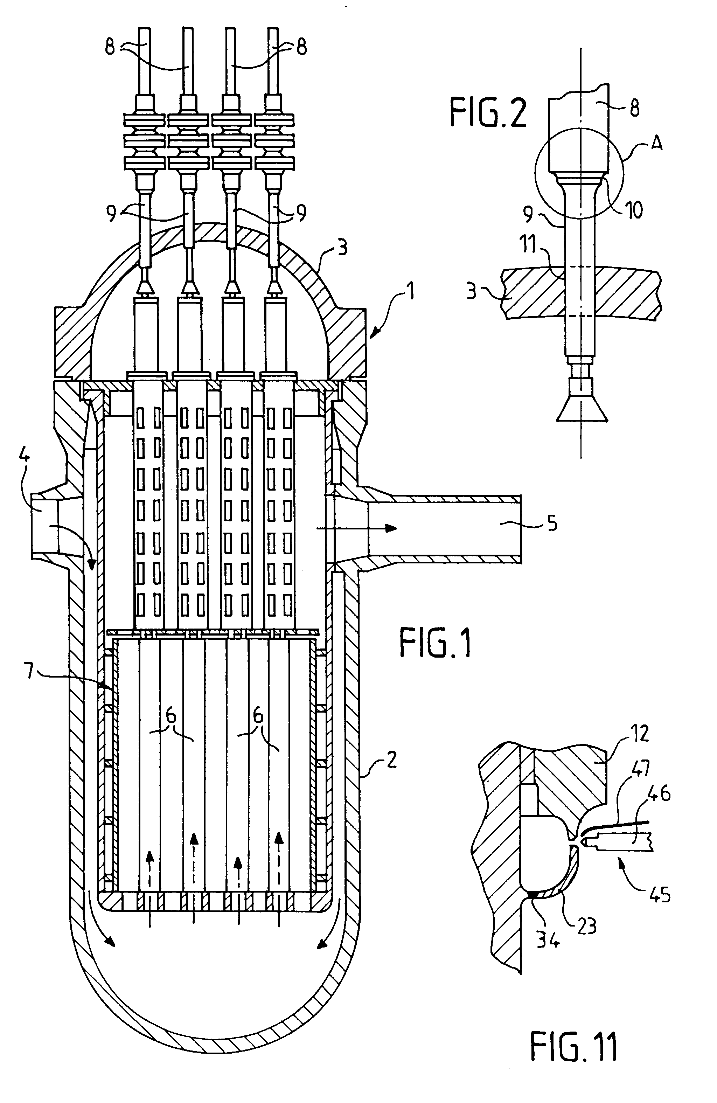

En référence tout d'abord à la figure 1, le réacteur 1 se compose essentiellement d'une cuve 2 et d'un couvercle 3. Le couvercle est amovible et il est maintenu sur la cuve par une série de goujons qui ne sont pas illustrés sur la figure 1.

De façon connue, la cuve 2 présente un orifice d'entrée 4 et un orifice de sortie 5, le fluide de refroidissement circulant de manière classique dans la cuve.

A l'intérieur de celle-ci sont prévus des assemblages de combustible 6, dans le coeur 7 du réacteur.

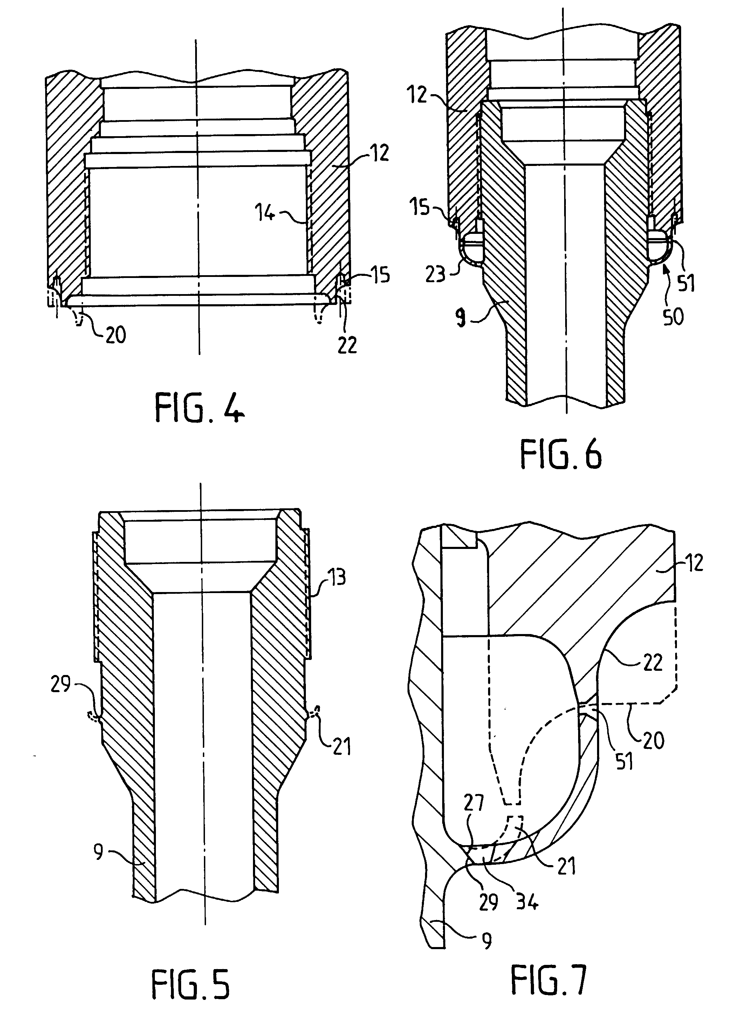

Sont également prévus des mécanismes 8 permettant la commande des grappes de contrôle destinées à piloter la réaction. Ces mécanismes sont fixés au couvercle 3 par l'intermédiaire d'adaptateurs 9. Comme indiqué précédemment, de façon à assurer l'étanchéité entre chaque adaptateur et le mécanisme correspondant, est classiquement prévu un joint 10 qui est illustré plus en détail en référence aux figures 2 et 3.

La figure 2 montre de façon plus précise un mécanisme de grappe de contrôle 8 ainsi qu'un adaptateur 9. Le couvercle 3 est percé d'un trou 11 qui sert à la mise en place de l'adaptateur 9. Entre le carter 12 du mécanisme 8 et l'adaptateur 9 est réalisé un joint 10. Ce joint est illustré à la figure 3. Il s'agit du joint, dit d'origine, qui est réalisé de façon classique entre un mécanisme de grappe de contrôle et un adaptateur.

On va maintenant se référer aux figures 4, 5 et 7, pour décrire de façon schématique la réalisation du joint d'origine.

Sur ces figures, sont indiqués en traits pointillés, les éléments constitutifs du joint d'origine, sur le carter du mécanisme de grappe de contrôle et sur l'adaptateur.

En effet, le joint d'origine est un joint dit à lèvres. Un premier profil ou lèvre 20 est réalisé à la partie inférieure du carter 12 du mécanisme de grappe de contrôle. Cette lèvre est, de façon classique, réalisée par usinage.

De même, à la partie supérieure de l'adaptateur 9, est réalisé un autre profil ou lèvre 21.

Le joint d'origine est alors formé par soudure des deux lèvres 20 et 21.

Comme indiqué précédemment, on réalise régulièrement des opérations de contrôle ou de maintenance. Le joint 10 est alors découpé. Une fois l'opération de contrôle ou de maintenance terminée, il est nécessaire de refaire le joint 10 pour assurer l'étanchéité. Pour cela, on effectue classiquement un nouveau ragréage des profils, c'est-à-dire une nouvelle reprise en surface.

Les lèvres 20 et 21 peuvent être endommagées de façon irréparable, lors d'une opération de maintenance ou de contrôle. Ceci est d'autant plus préjudiciable lorsqu'il s'agit de la lèvre 21 prévue sur l'adaptateur.

Pour accroître la durée de vie du mécanisme de grappe de contrôle comme de l'adaptateur, il est alors nécessaire de prévoir un nouveau joint, ce qui fait l'objet de la présente invention.

La réalisation du nouveau joint selon l'invention va être décrite en référence aux figures 4 à 7.

Il convient tout d'abord de supprimer la partie 21 du joint d'origine qui est située sur l'adaptateur.

Une nouvelle pièce en saillie ou lèvre 22 est ensuite usinée à la partie inférieure du carter 12 du mécanisme.

Elle est placée de manière à s'affranchir des trous taraudés 15 destinés à la fixation du carter de protection du mécanisme.

Avant que le mécanisme de grappe de contrôle 8 ne soit monté sur l'adaptateur, on fixe un élément 23 de forme générale annulaire sur l'adaptateur 9.

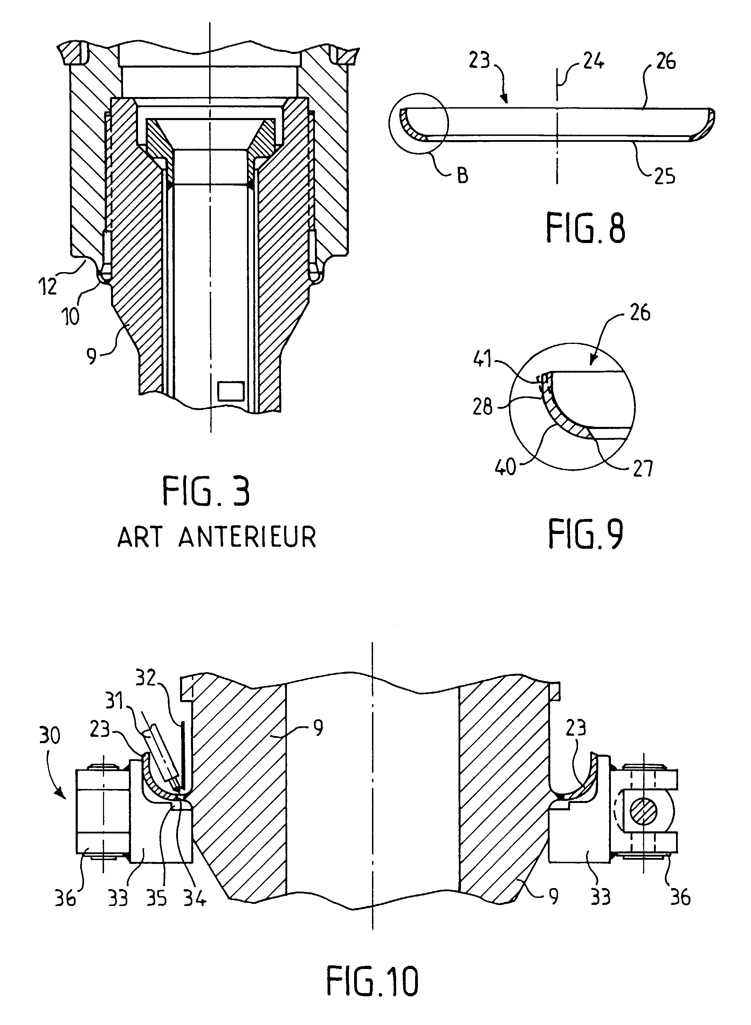

Cet élément 23 est illustré aux figures 8 et 9. Sa section, dans un plan perpendiculaire à son axe 24, présente la forme générale d'un arc de cercle dont la concavité est tournée vers l'axe 24.

L'élément 23 est donc délimité par deux orifices sensiblement circulaires. Le premier orifice 25 présente un diamètre légèrement supérieur à celui de la partie filetée 13 de l'adaptateur 9, tandis que le deuxième orifice 26 présente un diamètre correspondant sensiblement à celui de la lèvre 22, usinée sur le mécanisme 8.

De préférence, la section de l'élément 23 présente une première partie 40 en forme de quart de cercle prolongée, du côté du deuxième orifice 26, par une partie sensiblement rectiligne 41.

Comme illustré à la figure 9, le premier orifice 25 présente de préférence, un chanfrein 27. Ce chanfrein assure une soudure de meilleure qualité, grâce à la pénétration du métal d'apport dans l'élément 23.

L'élément 23 est alors soudé sur l'adaptateur 9 de préférence, au niveau de l'ancienne lèvre 21 du joint d'origine 10. Cette position est choisie pour des raisons pratiques. En effet, il est nécessaire de retirer la lèvre 21 avant de réaliser le nouveau joint. Il est alors aisé, lors de cette suppression, de réaliser un chanfrein 29 présentant une surface appropriée pour la réalisation de la soudure entre l'adaptateur 9 et l'élément 23.

A titre d'exemple, est illustré à la figure 10 un dispositif de soudure, utilisé pour la fixation de l'élément 23 sur l'adaptateur 9. Cette figure montre le dispositif 30, l'adaptateur et l'élément 23, dans sa partie gauche, pendant la réalisation de la soudure et dans sa partie droite, une fois la soudure effectuée.

Ce dispositif 30 comprend un ensemble de soudage TIG, qui comporte une électrode 31 pour la fusion de métal d'apport 32. Le dispositif comprend aussi un support 33 qui assure le positionnement et le maintien de l'élément 23. Le support 33 comprend un anneau en céramique 35 qui soutient le bain de fusion. Le dispositif 30 comprend également des moyens de serrage 36 du support 33 sur la paroi de l'adaptateur 9.

Après réalisation de la soudure 34 entre l'élément 23 et l'adaptateur 9, le mécanisme de grappe de contrôle 8 est assemblé sur l'adaptateur 9. Cet assemblage s'effectue par engagement du filetage 13 de l'adaptateur 9 dans le trou taraudé 14 du carter 12.

Après assemblage de l'adaptateur et du mécanisme de grappe de contrôle, une soudure d'étanchéité est effectuée entre l'extrémité libre de la pièce en saillie ou lèvre 22 et celle de l'élément 23.

La soudure entre le carter 12 et l'élément 23 est réalisée par des moyens classiques tel qu'un dispositif Tig orbital. Ce dispositif 45, illustré à la figure 11, comprend essentiellement une électrode 46 pour la fusion du métal d'apport 47.

On obtient alors le joint 50 illustré à la figure 6.

Comme cela est illustré sur la figure 9 en traits pointillés au niveau du second orifice 26, l'élément 23 est de préférence légèrement évasé. Dans ce cas, le diamètre du second orifice 26 est légèrement supérieur à celui de la pièce en saillie ou lèvre 22.

En effet, lors de la soudure, l'élément 23 a tendance à se déformer très légèrement, en direction de l'axe 24 et ne se trouve plus exactement en regard de la pièce 22.

A la figure 9, la référence 28 désigne la paroi d'extrémité évasée de l'élément 23, située au niveau de l'orifice 26. Dans l'exemple illustré, la partie sensiblement rectiligne 41 s'écarte donc légèrement de l'axe 24. L'angle que fait la partie 41 avec l'axe 24 est représentée de façon accentuée sur la figure 9 pour être visible.

Lorsqu'une telle partie évasée est prévue, elle se déforme légèrement en direction de l'axe 24, lors de la soudure, pour se trouver en regard de l'extrémité libre de la pièce en saillie 22. Ainsi, la pièce en saillie 22 et la surface d'extrémité délimitant l'orifice 26 coïncident de façon précise, après l'opération de soudure.

La description qui précède montre les avantages du procédé de réalisation d'un nouveau joint conforme à l'invention.

D'une part, par rapport au joint de secours de l'état de l'art, la fixation de l'élément 23 sur l'adaptateur 9 peut être avantageusement effectuée alors que le mécanisme 8 n'est pas encore monté sur l'adaptateur.

Ainsi, la fixation de l'élément 23 peut être effectuée sur l'adaptateur, du côté opposé au couvercle 3, par l'intérieur de l'élément 23 (cf Figure 10), ce qui résout les problèmes d'encombrement et assure une soudure de bonne qualité.

En effet, dans les dispositifs selon l'état de l'art, le mécanisme de grappe contrôle étant nécessairement monté sur l'adaptateur, le dispositif de soudure doit être placé entre le joint de secours et le couvercle 3, ce qui pose des problèmes d'accès et on obtient difficilement une soudure de bonne qualité.

On constate encore qu'avec le joint selon l'invention, la fixation de l'élément 23 sur le mécanisme de grappe de contrôle 8 et sur l'adaptateur 9 est effectuée entre des pièces de même épaisseur, la soudure est donc de meilleure qualité.

En effet, la pièce en saillie ou lèvre 22 est conçue pour présenter, au niveau de son extrémité libre, une épaisseur qui est sensiblement égale à celle de l'élément 23. De même, le chanfrein 29, usiné sur l'adaptateur 9, présente une section sensiblement identique à celle de la surface 27 de l'élément 23.

La conception du joint, par sa géométrie et la formation d'une lèvre sur le mécanisme, permet d'éviter l'apparition d'une zone de rétention préjudiciable à la tenue à la corrosion en fonctionnement. En outre, la géométrie du joint selon l'invention permet de réaliser des soudures entre des éléments d'épaisseur relativement faible, ce qui évite tout risque de corrosion intercristalline. En effet, une soudure entre des éléments d'épaisseur importante nécessiterait un traitement thermique postérieur.

Enfin, le joint selon l'invention ne constitue pas un joint de secours mais un nouveau joint, destiné à remplacer le joint d'origine.

Ainsi, de nouvelles opérations de contrôle ou de maintenance peuvent avoir lieu. Dans ce cas, le nouveau joint 50 est découpé au niveau de la soudure 51 entre l'élément 23 et le carter 12 du mécanisme, au moyen de dispositifs similaires à ceux qui sont utilisés pour le joint d'origine 10.

On peut encore noter que l'élément 23 peut être avantageusement constitué en une seule partie puisqu'il est placé sur l'adaptateur 9 avant que le mécanisme de grappe de contrôle 8 ne soit assemblé sur celui-ci. Ceci présente également un avantage par rapport au joint de secours selon l'art antérieur. En effet, comme indiqué précédemment, ces joints de secours nécessitent l'utilisation d'un élément composé d'au moins deux parties puisque cet élément est placé sur l'adaptateur alors que le mécanisme est déjà assemblé sur ce dernier.

Ainsi, le joint selon l'invention permet d'éviter des soudures croisées entre les différentes parties constitutives de l'élément formant le joint.

Les dispositifs de soudure utilisés sont des dispositifs classiques permettant par exemple de réaliser des soudures à l'arc électrique sous atmosphère inerte. Les procédés de soudure ainsi mis en oeuvre sont communément dénommés procédés "TIG".

Les signes de référence insérés après les caractéristiques techniques mentionnées dans les revendications, ont pour seul but de faciliter la compréhension de ces dernières, et n'en limitent aucunement la portée.

## Revendications

1. Procédé de réalisation d'un joint d'étanchéité entre un mécanisme de grappe de contrôle (8) et un adaptateur (9) correspondant de réacteur nucléaire, lorsque le joint d'origine est défaillant caractérisé en ce qu'il comprend les étapes suivantes :
- découpage du joint d'origine (10),
- désassemblage du mécanisme de grappe de contrôle (8) et de l'adaptateur (9),
- élimination de la partie (21) du joint d'origine (10) qui est située sur l'adaptateur,
- formation d'une pièce en saillie ou lèvre (22) à la partie inférieure du mécanisme (8), ladite pièce ou lèvre présentant une forme sensiblement annulaire,
- fixation sur l'adaptateur (9), d'un élément (23) de forme sensiblement annulaire,
- assemblage du mécanisme de grappe de contrôle (8) et de l'adaptateur (9) et
- fixation de l'élément (23) sur ladite pièce en saillie (22) formée à l'extrémité inférieure du mécanisme de grappe de contrôle (8), pour obtenir l'étanchéité.

2. Procédé conforme à la revendication 1, selon lequel la section de l'élément (23) présente une concavité tournée vers l'axe (24) dudit élément.

3. Procédé conforme à l'une des revendications 1 ou 2, selon lequel l'élément (23) est réalisé en une seule partie.

4. Procédé conforme à l'une des revendications 1 à 3, selon lequel l'élément (23) comporte un premier orifice (25) dont le diamètre est légèrement supérieur à celui de la partie filetée (13) de l'adaptateur (9) et un deuxième orifice (26) dont le diamètre correspond sensiblement à celui de la pièce en saillie ou lèvre (22).

5. Procédé conforme à la revendication 4, selon lequel le premier orifice (25) présente un chanfrein (27).

6. Procédé conforme à l'une des revendications 1 à 5, selon lequel un chanfrein (29) pour la fixation de l'élément (23) est réalisé sur l'adaptateur (9).

7. Procédé conforme à l'une des revendications 4 à 6, selon lequel la section de l'élément (23) présente une première partie en arc de cercle (40) qui se prolonge, du côté du deuxième orifice (26), par une partie sensiblement rectiligne (41).

8. Procédé conforme à l'une des revendications 4 à 7, selon lequel, avant fixation sur le mécanisme de grappe de contrôle (8), la paroi (28, 41) de l'élément (23) située du côté du deuxième orifice (26) est légèrement évasée, de façon à s'écarter de l'axe (24) dudit élément (23), le diamètre du deuxième orifice étant alors légèrement supérieur à celui de la pièce en saillie ou lèvre (22).

9. Procédé conforme à l'une des revendications 1 à 8, selon lequel la fixation dudit élément (23) sur le mécanisme de grappe de contrôle (8) et sur l'adaptateur (9) est réalisée par soudure.

10. Procédé conforme à la revendication 9, selon lequel la soudure est réalisée à l'arc électrique, sous atmosphère inerte.

11. Procédé conforme à l'une des revendication 1 à 10, selon lequel ladite pièce en saillie ou lèvre (22) est formée sur le mécanisme (8) par usinage.

12. Joint d'étanchéité pour le remplacement d'un joint d'origine entre un mécanisme de grappe de contrôle (8) et un adaptateur (9) caractérisé en ce qu'il comprend un élément (23) annulaire, fixé sur une pièce en saillie ou lèvre (22) sensiblement annulaire formée à la partie inférieure dudit mécanisme (8) et sur ledit adaptateur.

13. Joint d'étanchéité conforme à la revendication 12, selon lequel la section dudit élément (23) présente une concavité tournée vers l'axe (24) dudit élément.

14. Joint d'étanchéité conforme à l'une des revendications 12 ou 13, selon lequel l'élément (23) est réalisé en une seule partie.

15. Joint d'étanchéité conforme aux revendications 12 à 14, selon lequel ledit élément (23) comprend un premier orifice (25) dont le diamètre est légèrement supérieur à celui de la partie filetée (13) de l'adaptateur (9) et un deuxième orifice (26) dont le diamètre correspond sensiblement à celui de ladite pièce en saillie ou lèvre (22).

16. Joint d'étanchéité conforme à la revendication 15, selon lequel le premier orifice (25) présente un chanfrein (27).

17. Joint d'étanchéité conforme à l'une des revendications 15 ou 16 caractérisé en ce que la section dudit élément (23) présente une première partie en arc de cercle (40) qui se prolonge, du côté du deuxième orifice (26), par une partie sensiblement rectiligne (41).

18. Joint d'étanchéité conforme à l'une des revendications 15 à 17, selon lequel, avant fixation sur le mécanisme de grappe de contrôle (8), la paroi (28, 41) dudit élément (23) située du côté du deuxième orifice (26) est légèrement évasée, et s'écarte de l'axe (24) dudit élément (23), le diamètre du deuxième orifice (26) étant alors légèrement supérieur à celui de ladite pièce en saillie ou lèvre (22).

19. Joint d'étanchéité conforme à l'une des revendications 12 à 18, selon lequel l'élément (23) est fixé, par soudure, sur le mécanisme de grappe de contrôle (8) et sur l'adaptateur (9).

## Patentansprüche

1. Verfahren zur Herstellung Einer Dichtung zwischen einem Bündelsteuerungsmechanismus (8) und einem entsprechenden Kernreaktoradapter (9), wenn die usprüngliche Dichtung ausfällt,
dadurch gekennzeichnet, dass es die folgenden Schritte umfasst :
- Ausschneiden der ursprünglichen Dichtung (10),
- Auseinandernahme des Bündelsteuerungsmechanismus (8) und des Adapters (9),
- Beseitigung desjenigen Teiles (21) der ursprünglichen Dichtung (10), der auf dem Adapter gelegen ist,
- Bildung eines vorspringenden Stückes bzw. einer Lippe (22) am unteren Teil des Mechanismus (8), wobei das besagte Stück bzw. die besagte Lippe eine etwa ringförmige Gestalt aufweist,
- Befestigung eines Elementes (23) etwa ringförmiger Gestalt an dem Adapter (9),
- Zusammenbau des Bündelsteuerungsmechanismus (8) und des Adapters (9) und
- Befestigung des Elementes (23) an dem besagten am unteren Ende des Bündelsteuerungsmechanismus (8) gebildeten vorspringenden Stück (22), um die Dichtheit zu erzielen.

2. Verfahren gemäss dem Anspruch 1, nach welchem der Querschnitt des Elementes (23) eine der Achse (24) des besagten Elementes zugewandte Konkavität aufweist.

3. Verfahren gemäss einem der Ansprüche 1 oder 2, nach welchem das Element (23) als ein einziger Teil hergestellt wird.

4. Verfahren gemäss einem der Ansprüche 1 bis 3, nach welchem das Element (23) eine erste Öffnung (25), deren Durchmesser etwa grösser als derjenige des Gewindeteiles (13) des Adapters (9) ist und eine zweite Öffnung (26), deren Durchmesser etwa demjenigen des vorspringenden Stückes bzw. der Lippe (22) entspricht, aufweist.

5. Verfahren gemäss dem Anspruch 4, nach welchem die erste Öffnung (25) eine Fase (27) aufweist.

6. Verfahren gemäss einem der Ansprüche 1 bis 5, dadurch gekennzeichnet, dass eine Fase (29) für die Befestigung des Elementes (23) an dem Adapter (9) gebildet wird.

7. Verfahren gemäss einem der Ansprüche 4 bis 6, nach welchem der Querschnitt des Elementes (23) einen ersten kreisbogenförmigen Teil (40) aufweist, der sich, zur zweiten Öffnung (26) hin, durch einen etwa geradlinigen Teil (41) fortsetzt.

8. Verfahren gemäss einem der Ansprüche 4 bis 7, nach welchem, vor der Befestigung an dem Bündelsteuerungsmechanismus (8), die zur zweiten Öffnung (26) hin gelegene Wand (28, 41) des Elementes (23) etwas aufgeweitet ist, um sich von der Achse (24) des besagten Elementes (23) zu entfernen, wobei der Durchmesser der zweiten Öffnung dann etwas grösser als derjenige des vorspringenden Stückes bzw. der Lippe (22) ist.

9. Verfahren gemäss einem der Ansprüche 1 bis 8, nach welchem die Befestigung des besagten Elementes (23) an dem Bündelsteuerungsmechanismus (8) und an dem Adapter (9) durch Schweissen hergestellt wird.

10. Verfahren gemäss dem Anspruch 9, nach welchem das Schweissen mit einem Lichtbogen in einer Inertatmosphäre durchgeführt wird.

11. Verfahrem gemäss einem der Ansprüche 1 bis 10, nach welchem das besagte vorspringende Stück bzw. die besagte Lippe (22) an dem Mechanismus (8) durch maschinelle Bearbeitung gebildet wird.

12. Dichtung zum Ersatz einer ursprünglichen Dichtung zwischen einem Bündelsteuerungsmechanismus (8) und einem Adapter (9), dadurch gekennzeichnet, dass sie ein ringförmiges Element (23) umfasst, das an einem etwa ringförmigen vorspringenden Stück bzw. einer etwa ringförmigen Lippe (22), das bzw. die an dem unteren Teil des besagten Mechanismus (8) und an dem besagten Adapter gebildet ist, befestigt ist.

13. Dichtung nach Anspruch 12, gemäss welcher der Querschnitt des besagten Elementes (23) eine der Achse (24) des besagten Elementes zugewandte Konkavität aufweist.

14. Dichtung nach einem der Ansprüche 12 oder 13, gemäss welcher das Element (23) als ein einziger Teil hergestellt wird.

15. Dichtung nach den Ansprüchen 12 bis 14, gemäss welcher das besagte Element (23) eine erste Öffnung (25), deren Durchmesser etwas grösser als derjenige des Gewindeteiles (13) des Adapters (9) ist und eine zweite Öffnung (26), deren Durchmesser demjenigen des besagten vorspringenden Stückes bzw. der besagten Lippe (22) entspricht, aufweist.

16. Dichtung nach Anspruch 15, gemäss welcher die erste Öffnung (25) eine Fase (27) aufweist.

17. Dichtung gemäss einem der Ansprüche 15 oder 16, dadurch gekennzeichnet, dass der Querschnitt des besagten Elementes (23) einen ersten kreisbogenförmigen Teil (40) aufweist, der sich zur zweiten Öffnung (26) hin durch einen etwa geradlinigen Teil (41) fortsetzt.

18. Dichtung nach einem der Ansprüche 15 bis 17, gemäss welcher vor der Befestigung an dem Bündelsteuerungsmechanismus (8), die zur zweiten Öffnung (26) hin gelegene Wand (28, 41) des besagten Elementes (23) etwas erweitert ist und sich von der Achse (24) des besagten Elementes (23) entfernt, wobei der Durchmesser der zweiten Öffnung (26) dann etwas grösser als derjenige des besagten vorspringenden Stückes bzw. der besagten Lippe (22) ist.

19. Dichtung nach einem der Ansprüche 12 bis 18, gemäss welcher das Element (23) an dem Bündelsteuerungsmechanismus (8) und an dem Adapter (9) durch Schweissen befestigt wird.

## Claims

1. Method of making a sealing joint between a cluster control mechanism (8) and a corresponding nuclear reactor adaptor (9) when the original joint is failing,
characterized in that it comprises the following steps :
- cutting out of the original joint (10),
- disassembling of the cluster control mechanism (8) and of the adaptor (9),
- removal from that portion (21) of the original joint (10) which is located on the adaptor,
- formation of a projecting piece or lip (22) at the lower portion of the mechanism (8), the said piece or lip exhibiting a substantially annular shape,
- fastening onto the adaptor (9) of an element (23) with a substantially annular shape,
- assembly of the cluster control mechanism (8) and of the adaptor (9) and
- fastening of the element (23) onto the said projecting piece (22) formed at the lower end of the cluster control mechanism (8) to obtain fluid-tightness.

2. Method according to claim 1, according to which the section of the element (23) exhibits a concavity turned towards the axis (24) of the said element.

3. Method according to one of claims 1 or 2, according to which the element (23) is made in one single part.

4. Method according to one of claims 1 to 3, according to which the element (23) comprises a first opening (25) the diameter of which is slightly greater than that of the threaded portion (13) of the adaptor (9) and a second opening (26) the diameter of which corresponds substantially to that of the projecting piece or lip (22).

5. Method according to claim 4, according to which the first opening (25) exhibits a chamfer (27).

6. Method according to one of claims 1 to 5, according to which a chamfer (29) for the fastening of the element (23) is provided on the adaptor (9).

7. Method according to one of claims 4 to 6, according to which the section of the element (23) exhibits a first portion shaped as an arc of a circle (40) which is extended towards the second opening (26) by a substantially rectilinear portion (41).

8. Method according to one of claims 4 to 7, according to which, before the fastening onto the cluster control mechanism (8), the wall (28, 41) of the element (23) located towards the second opening (26) is slightly flaring so as to be spaced away from the axis (24) of the said element (23), the diameter of the second opening then being slightly greater than that of the projecting piece or lip (22).

9. Method according to one of claims 1 to 8, according to which the fastening of the said element (23) onto the cluster control mechanism (8) and onto the adaptor (9) is made by welding.

10. Method according to claim 9, according to which the welding is made with an electric arc under an inert atmosphere.

11. Method according to one of claims 1 to 10, according to which the said projecting piece or lip (22) is formed onto the mechanism (8) by machining.

12. Sealing joint for the replacement of an original joint between a cluster control mechanism (8) and an adaptor (9), characterized in that it comprises an annular element (23) fastened onto a substantially annular projecting piece or lip (22) formed at the lower portion of the said mechanism (8) and onto the said adaptor.

13. Sealing joint according to claim 12, according to which the section of the said element (23) exhibits a concavity turned towards the axis (24) of the said element.

14. Sealing joint according to one of claims 12 or 13, according to which the element (23) is made in one single part.

15. Sealing joint according to claims 12 to 14, according to which the said element (23) comprises a first opening (25) the diameter of which is slightly greater than that of the threaded portion (13) of the adaptor (9) and a second opening (26) the diameter of which substantially corresponds to that of the said projecting piece or lip (22).

16. Sealing joint according to claim 15, according to which the first opening (25) exhibits a chamfer (27).

17. Sealing joint according to one of claims 15 or 16, characterized in that the section of the said element (23) exhibits a first portion shaped as an arc of a circle (40) which is extended towards the second opening (26) by a substantially rectilinear portion (41).

18. Sealing joint according to one of claims 15 to 17, according to which, prior to the fastening onto the cluster control mechanism (8), the wall (28, 41) of the said element (23) located towards the second opening (26) is slightly flared and is spaced away from the axis (24) of the said element (23), the diameter of the second opening (26) being then slightly greater than that of the said projecting piece or lip (22).

19. Sealing joint according to one of claims 12 to 18, according to which the element (23) is fastened by welding onto the cluster control mechanism (8) and onto the adaptor (9).
